# EUROPÄISCHE PATENTSCHRIFT

(11) **EP 1 155 533 B1**
(45) Veröffentlichungstag und Bekanntmachung des Hinweises auf die Patenterteilung: **08.12.2004**
(21) Anmeldenummer: 00909017.6
(22) Anmeldetag: 08.02.2000
(51) Int. Cl.: H04L 12/28

(54) **VERFAHREN, ZENTRALE UND TEILNEHMEREINRICHTUNG ZUR EFFEKTIVEN AUSNUTZUNG VON DATENPAKETEN UNTERSCHIEDLICHER KAPAZITÄT**
METHOD FOR THE EFFICIENT USE OF DATA PACKETS HAVING DIFFERENT CAPACITIES AND CENTRAL UNIT AND SUBSCRIBER DEVICE FOR A COMMUNICATIONS SYSTEM
PROCEDE PERMETTANT UNE EXPLOITATION EFFICACE DES PAQUETS DE DONNEES DE CAPACITES DIFFERENTES AINSI QUE CENTRAL ET INSTALLATION D'ABONNE POUR SYSTEME DE COMMUNICATION

(30) Priorität: 19.02.1999 DE 19907020
(43) Veröffentlichungstag der Anmeldung: 21.11.2001
(73) Patentinhaber: ROBERT BOSCH GMBH, 70442 Stuttgart (DE)
(72) Erfinder: VOLLMER, Vasco, D-29471 Gartow (DE); RADIMIRSCH, Markus, D-30880 Laatzen (DE)
(86) Internationale Anmeldenummer: PCT/DE2000/000380
(87) Internationale Veröffentlichungsnummer: WO 2000/049770

(56) Entgegenhaltungen:
- EP-A- 0 800 325
- EP-A- 0 827 312
- DE-C- 19 629 899
- US-A- 4 520 477

## Beschreibung

### Stand der Technik

Die Erfindung geht aus von einem Verfahren zur effektiven Ausnutzung von Datenpaketen unterschiedlicher Kapazität, die in einem Kommunikationssystem zwischen einer Zentrale und einer Vielzahl von Teilnehmern übermittelt werden. Außerdem bezieht sich die Erfindung auf eine Zentrale für ein Kommunikationssystem mit rahmenorientierter Übertragung von Datenpaketen unterschiedlicher Kapazität zwischen der Zentrale und einer Vielzahl von Teilnehmern, sowie auf eine entsprechende Teilnehmereinrichtung.

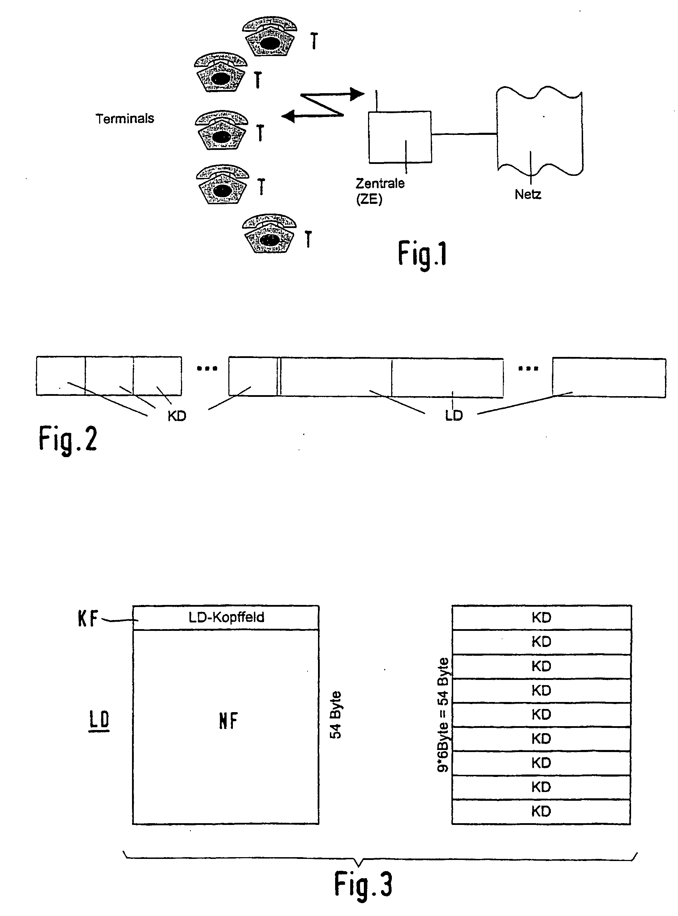

In zentral gesteuerten Kommunikationsnetzen, bspw. im zentral gesteuerten zellularen Funknetz gemäß dem ETSI-Projekt HIPERLAN Type 2 ist eine Zentrale ZE vorgesehen, an die mehrere Teilnehmer bzw. deren Terminals angeschlossen werden können (vgl. Figur 1). Dieses Funknetz arbeitet verbindungsorientiert, das heißt, bevor Daten mit anderen Teilnehmern bzw. deren Terminals, die an das Netz oder die Zentrale ZE angeschlossen sind, ausgetauscht werden können, muß mindestens eine Verbindung aufgebaut werden. Den Terminals wird die von ihnen benötigte Datenrate auf dem gemeinsam genutzten Medium von der Zentrale aufgrund von Anforderungen der Teilnehmer zugewiesen. Es ist für ein Terminal eines Teilnehmers möglich, mehr als eine aktive virtuelle Verbindung gleichzeitig zu haben, wie dies bei ATM der Fall ist. In einer Realisierungsform dieses Netzes werden sowohl die Ressourcen-Anforderungen (Ressource Request) der Terminals, als auch die Ressourcen-Zuweisungen der Zentrale ZE (Ressource Grants) pro Verbindung durchgeführt, das heißt das Terminal überträgt für jedes seiner Verbindungen die Menge der Datenpakete, die übertragen werden müssen. Als Ressource gilt hier die Bereitstellung von Datenraten auf dem Medium, während dessen Daten übertragen werden können. Dementsprechend sendet die Zentrale ZE für jede Verbindung des Terminals eine Ressourcen-Zuweisung. In weiteren Realsierungsformen dieses Netzes ist jedoch auch die Möglichkeit vorgesehen, die Ressourcen-Zuweisung und -Anforderung pro Terminal durchzuführen, das heißt das Terminal kann selbst entscheiden, welche Datenpakete es sendet. Bei der Ressourcen-Zuweisung pro Verbindung ist die Zugehörigkeit eines gesendeten Datenpaketes zu einer Verbindung implizit durch die Zuweisung der Zentrale ZE gegeben, diese Information ist also bereits in der Zentrale ZE vorhanden und muß deshalb nicht zusätzlich vom Terminal übertragen werden.

Bei der Ressourcen-Zuweisung pro Terminal hat die Zentrale ZE keine Vorabinformation darüber, zu welcher Verbindung des Terminals ein empfangenes Datenpaket gehört. Bei dieser Variante muß das Terminal diese Informationen deshalb zusätzlich übertragen. Das gleiche gilt für eine Ressourcen-Anforderung, bzw. -Zuweisung pro Verkehrsklasse, wie sie in [1] ausführlich und in [2] den wesentlichen Punkten beschrieben ist ([1]:Kapitel 8.2, DynPara-PDU, [2]:Kapitel 4).

Im vorgenannten Funknetz sind zwei verschiedene Datenpaketgrößen für die zu übertragenden Daten vorgesehen. Dabei dienen kurze Pakete (ca. 6 Byte; kurzer Datencontainer: KD) der Übertragung von Steuerungsinformationen, das heißt Informationen, die nicht Nutzdaten sind, sondern dazu dienen, das Netzwerk zu steuern und zu verwalten, also bspw. Verbindungen zu etablieren, Terminals zu assoziieren, Handover durchzuführen oder falsch empfangene Datenpakete noch einmal anzufordern. Lange Datencontainer LD haben eine Länge von ca. 54 Byte und dienen im Normalfall dazu, Nutzdaten zu übertragen. Zusätzlich zu den reinen Nutzdaten sind noch einige weitere Informationen enthalten, die in sehr engem Zusammenhang mit den Nutzdaten stehen, z.B. Sequenznummer oder eine Prüfsumme zur Fehlererkennung.

Eine Aussendung sowohl in Downlink (Zentrale in Richtung Teilnehmer) - als auch in Uplink - Richtung (Terminal in Richtung Zentrale) besteht aus einer Anzahl von Steuerdatenpaketen KD am Anfang und einer darauf folgenden Anzahl von Nutzdatenpaketen LD gemäß Figur 2. Die genaue Anzahl der Steuerdatenpakete KD und Nutzdatenpakete LD wird von der Zentrale ZE in der Ressourcen-Zuweisung festgelegt.

### Vorteile der Erfindung

Die Maßnahmen gemäß den Ansprüchen 1 oder 12 und 13 geben den Teilnehmern bzw. deren Terminals die Möglichkeit bei Bedarf einen Container für Nutzdatenpakete für die Übertragung von Steuerungsinformationen zu verwenden. Diese Möglichkeit ist insbesondere dann von hohem Nutzen, wenn lange Steuerungsinformationen übertragen werden müssen, wie diese zum Beispiel bei Handover oder Terminal-Assoziierung (Anmelden eines Terminals bei der Zentrale vor Aufnahme der Datenkommunikation) auftreten. Außerdem erhält das Terminal durch die Nutzung eines Containers für Nutzdatenpakete für mehrere kurze Steuerungsdatenpakete die Möglichkeit, dringende Steuerungsinformationen auch ohne vorhergehende Anforderung zu senden.

Durch die einfache Möglichkeit Steuerungsinformationen auch in eigentlich für Nutzdaten vorgesehenen Datencontainern zu senden, erhält ein Terminal die Möglichkeit sehr viel flexibler, schneller und effizienter auf veränderte Situationen zu reagieren. Dies ist insbesondere bei der Funkübertragung mit ihren schnell wechselnden Funkkanaleigenschaften von großem Nutzen. Außerdem erhält durch das vorgeschlagene Verfahren ein Terminal die Möglichkeit große Mengen an Steuerungsinformationen effizienter zu übertragen.

In den Unteransprüchen sind vorteilhafte Ausgestaltungen des Verfahrens bzw. der Zentrale und der Teilnehmereinrichtungen aufgezeigt.

### Zeichnungen

Anhand der weiteren Zeichnungen werden Ausführungsbeispiele der Erfindung näher erläutert. Es zeigen
Figur 3 das Auffüllen eines Containers für Nutzdatenpakete mit Steuerdatenpaketen,
Figur 4 einen Übertragungsburst eines Teilnehmer-Terminals im Uplink,
Figur 5 die Unterbringung eines Kopffeldes neben den Steuerdatenpaketen in einem Container für Nutzdatenpakete, Figur 6 die Ankündigung eines Blockes von Steuerdatenpaketen in einem Container für Nutzdatenpakete,
Figur 7 den Aufbau der Zentrale für ein Kommunikationssystem nach der Erfindung und
Figur 8 den Aufbau einer Teilnehmereinrichtung für ein Kommunikationssystem nach der Erfindung.

### Beschreibung von Ausführungsbeispielen

Im eingangs erwähnten HIPERLAN Type 2 Kommunikationsnetz existieren zwei verschiedene Sorten Datencontainer unterschiedlicher Kapazität. Datenpakete mit einer Länge von ca. 6 Byte enthalten in der Regel Steuerinformationen. Sie werden nachfolgend als Steuerdatenpakete KD bezeichnet. Datenpakete mit einer Länge von ca. 54 Byte, das heißt mit einer Datenkapazität von einem Vielfachen vorgenannter Datenpakete, enthalten neben den Nutzdaten NF nur ein kurzes Kopffeld KF, in dem unmittelbar zum Containerinhalt gehörende Daten stehen, wie z.B. Sequenznummer und Fehlerkorrekturbits. Diese Datenpakete werden nachfolgend als Nutzdatenpakete LD bezeichnet (Figur 3). Die Nutzdatenpakete LD und die Steuerdatenpakete KD werden zwischen einer Zentrale ZE und den Teilnehmer-Terminals T ausgetauscht, wobei eine rahmenorientierte Übertragung eingesetzt wird (Figur 1).

Insbesondere für den Fall, daß ein Teilnehmer bzw. dessen Terminal T dringende Steuerinformationen übertragen möchte, wird dem Terminal T erfindungsgemäß die Möglichkeit gegeben einen Container für Nutzdatenpakete LD mit einer Mehrzahl von Steuerdatenpaketen KD zu füllen.

Dies ist in Figur 3 dargestellt: Im Übertragungsrahmen wird ein Container für Nutzdaten LD mit neun Steuerdatenpaketen KD gefüllt. Dazu muß der Zentrale ZE allerdings bekannt sein, daß es sich nicht um einen normalen Container mit Nutzdaten handelt. Zu diesem Zweck wird erfindungsgemäß zwischen Zentrale ZE und einem Teilnehmer T eine Vereinbarung getroffen, daß Container für Nutzdatenpakete LD mit Steuerdatenpaketen KD gefüllt werden, die zusammen übermittelt werden, und festgelegt, welche Container für Nutzdatenpakete im Übertragungsrahmen jeweils mit Steuerdatenpaketen KD gefüllt werden. Dabei gibt es unterschiedliche Wege diese Vereinbarung zu treffen:
1. ein Terminal kündigt dies in einem vorhergehenden Steuerdatenpaket KD an. Dieses Vorgehen setzt ein Auswerten von Steuerdatenpaketen KD vor der Auswertung von Nutzdatenpaketen LD voraus,
2. durch Ankündigung des Modus im Kopffeld KF eines Nutzdatenpakets LD,
3. durch Übermitteln einer Anforderung durch ein Terminal T an die Zentrale ZE einen Container für Nutzdatenpakete mit Steuerdatenpaketen füllen zu können,
4. durch Festlegen einer festen Vereinbarung, daß ab einer bestimmten Anzahl von Anforderungen von Steuerdatenpaketen KD durch ein Terminal T statt dessen ein Container für Nutzdatenpakete LD zum Auffüllen mit Steuerdatenpaketen KD von der Zentrale ZE zugewiesen wird.

Jene Steuerdatenpakete KD, die in Containern für Nutzdatenpakete LD untergebracht werden, sind vorzugsweise in einem Unterrahmen zusammengefaßt, welcher in seinem äußeren Format an das Format eines Nutzdatenpaketes LD angepaßt ist, selbst wenn die Anzahl der aktuell zu übertragenden Steuerdatenpakete KD nicht ausreichend ist den Container vollständig zu füllen.

Die vier aufgezeigten Möglichkeiten zur Vereinbarung des Auffüllens von Containern für Nutzdatenpakete LD mit Steuerdatenpaketen KD werden nachfolgend im Detail beschrieben.

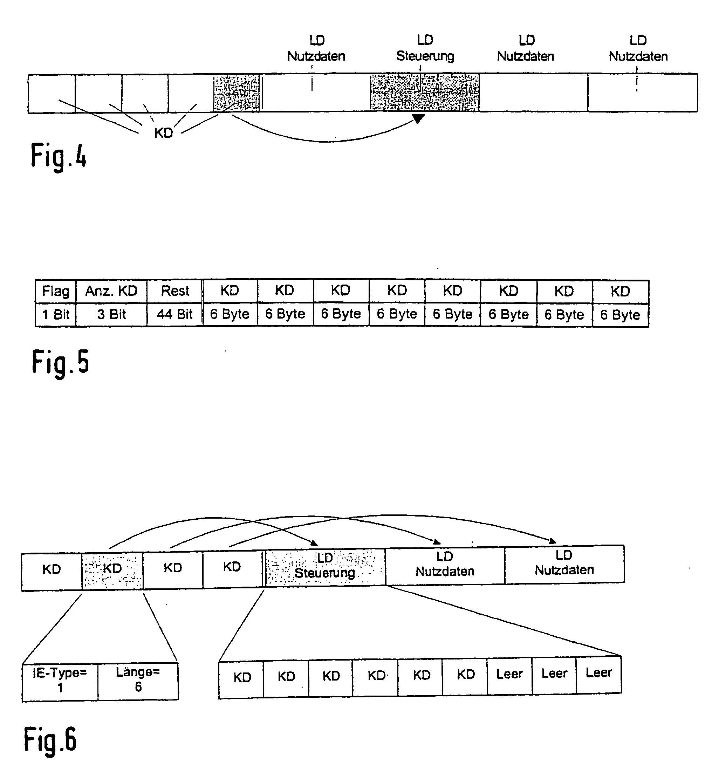

Bei der ersten Möglichkeit besteht die Datenübertragung eines Terminals (Übertragungsburst) im Uplink durch Übermitteln eines Blockes von Steuerdatenpaketen KD gefolgt von einem Block Nutzdatenpakete LD gemäß Figur 4. Eines dieser Steuerdatenpakete KD oder ein Teil davon wird dazu verwendet, Informationen über den Inhalt eines nachfolgenden Containers für Nutzdatenpakete, der mit einem Block von Steuerdatenpaketen KD aufgefüllt wird (LD-Steuerung gem. Figur 4) zu übermitteln. Dazu wird ein neues Informationselement IE definiert, das die Anzahl. der für Steuerdatenpakete KD belegten Felder innerhalb eines bestimmten Containers für Nutzdatenpakete LD bestimmt. Außerdem muß eine Information enthalten sein, die bestimmt, welche der nachfolgenden Container für Nutzdatenpakete LD gemeint ist (in Figur 4 als Pfeil dargestellt). Dies kann ein Zeiger sein - also beispielsweise die Information: der n-te Container für Nutzdatenpakete LD enthält x Steuerdatenpakete KD. Realisierbar ist auch eine Festlegung, daß alle Container für Nutzdatenpakete LD, die mit einer Folge von Steuerdatenpaketen KD gefüllt werden, an einer bestimmten Position innerhalb eines Nutzdatenpakete-Blocks gesendet werden müssen, z.B. zu Beginn (in Figur 4 nicht dargestellt). In diesem Fall reicht die bloße Angabe der Anzahl der Steuerungs-LD aus. Dieses Informationselement wird in einem der sowieso vorhandenen Steuerdatenpakete KD vom Terminal ausgesendet. Eine weitere Möglichkeit besteht darin, daß es für jedes der Nutzdatenpakete LD ein Informationselement IE in einem vorhergehenden Steuerdatenpaket KD gibt, so daß die Zuordnung einfach durch die Reihenfolge geschieht.
Möglich ist, wie zuvor kurz erläutert, in den Container für Nutzdatenpakete LD ein Feld, insbesondere im Kopffeld einzufügen, das die Information enthält, welche Art der Information es beinhaltet. In Figur 5 als Flag-Feld bezeichnet. Dafür reicht z.B. ein Bit. Danach folgt dann ein weiteres Feld (Anz. KD), das für die Steuerungsinformation die Anzahl der folgenden Steuerdatenpakete KD enthält (hier maximal 8). Der Rest des Kopffeldes besteht aus 44 Bit und kann für andere Zwecke genutzt werden. An das Kopffeld schließt sich ein Block von 8 Steuerdatenpaketen KD zu je 6 Byte an.

Die zuvor vorgestellte Variante des Übermittelns einer Anforderung eines Containers für Nutzdatenpakete zum Füllen mit Steuerdatenpaketen dient nicht dazu, dem Terminal T eine außerplanmäßige Übertragung von Steuerungsinformation zu ermöglichen, da hier die normale Ressourcen-Anforderung verwendet wird. Diese Ressouren-Anforderung funktioniert in der Art, daß das Terminal den Bedarf für den folgenden MAC-Übertragungsrahmen berechnet und dann der Zentrale ZE ein Informationselement mit dieser Anforderung sendet. Diese Anforderung kann für jede virtuelle Verbindung, für jede Diensteklasse oder über alles gemeinsam erfolgen. Diese Variante ist normalerweise nur dann sinnvoll, wenn durch die Verwendung eines Containers für Nutzdatenpakete zur Belegung mit Steuerungsinformationen der notwendige Signalisierungsoverhead reduziert wird. Je nach Art der Signalisierung von Ressourcen-Zuweisungen durch die Zentrale ist dies möglich, wenn für jeden einzelnen Container Signalisierung notwendig ist.

Die zuletzt vorgestellte Alternative für die Vereinbarung zum Auffüllen eines Containers für Nutzdatenpakete mit Steuerdatenpaketen ist entsprechend der Alternative mit Übermittlung eines Anforderungssignals realisierbar mit dem Unterschied, daß hier nun ein automatisiertes Verfahren benutzt wird, bei dem das Terminal T allerdings weiterhin Steuerdatenpakete KD anfordert, diese aber von der Zentrale ZE bei Überschreiten einer bestimmten Anzahl von angeforderten Steuerdatenpaketen als ein oder mehrere lange PDUs innerhalb eines Containers für Nutzdatenpakete zugewiesen werden.

Für die ersten beiden Varianten wird nun ein konkretes Ausführungsbeispiel angegeben, wobei davon ausgegangen wird, daß dem Terminal T die Möglichkeit gegeben werden soll, eilige umfangreiche Steuerungsinformationen zu übertragen. Dies kann insbesondere im Handover-Fall auftreten, da hier unter Umständen sehr schnell - im Fall von schnell schlechter werdenden Kanaleigenschaften - große Mengen von Steuerungsinformationen übertragen werden müssen, z.B. Verbindungsparamenter. Wenn die notwendigen Kapazitäten erst vorher angefordert werden müßten, könnte es passieren, daß die Verbindung vorher abbricht. Ein weiterer Anwendungsfall ist ein vorübergehend schlechter Kanal. In diesem Fall müssen fehlerhaft empfangene Pakete von der Zentrale neu angefordert werden (Automatic Repeat Request). Da die Anzahl der Neuanforderungen außergewöhnlich hoch sein kann, erhöht sich in diesem Fall das Aufkommen an Steuerungsinformation und damit der Bedarf an Steuerdatenpaketen KD.

Wenn eine dringende Übertragung von vielen Steuerungsinformationen notwendig ist, wandelt das Terminal T einen Container für Nutzdatenpakete LD, der ursprünglich zur Übertragung von Nutzdaten vorgesehen war, in einen Container für Steuerdatenpakete KD um.

Als Beispiel für die Ankündigung eines umgewandelten Containers für Nutzdatenpakete LD innerhalb eines vorhergehenden Steuerdatenpaketes KD wird hier angenommen, das dem betrachteten Terminal T vier Steuerdatenpakete KD und drei Nutzdatenpakete LD zur Verfügung stehen. Außerdem wird ein Handover angenommen, das in dieser Phase die Übertragung von sechs Steuerdatenpaketen KD notwendig macht. Weiterhin wird angenommen, daß jeder Container für Nutzdatenpakete LD von einem zugehörigen Steuerdatenpaket KD begleitet wird, in dem die Informationselemente mit Aussagen z.B. über die zugehörige virtuelle verbindung stehen.

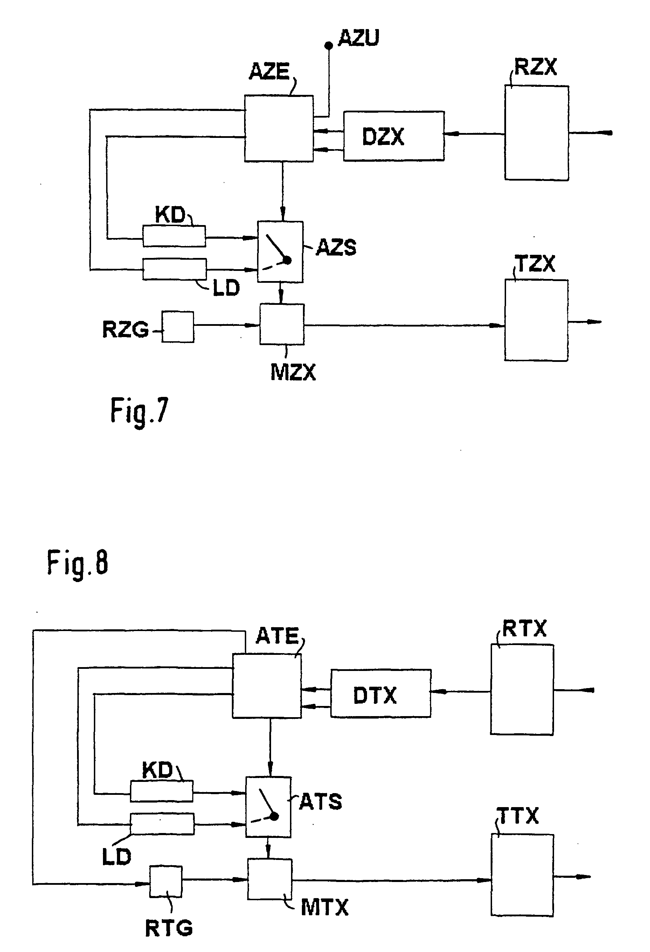

Das Terminal T sucht sich jetzt die virtuelle Verbindung aus, die am wenigsten dringende Daten hat, und verwendet den dafür vorgesehenen Container für Nutzdatenpakete LD zur Übertragung der notwendigen Informationselemente mit Handover-Informationen in sechs Steuerdatenpaketen KD, wie in Figur 6 dargestellt. Das vorhergehende Steuerdatenpaket KD enthält ein Informationselement mit einer Kennung (IE-Type), die anzeigt, daß es sich um Informationen zur Umwandlung eines Containers für Nutzdatenpakete LD handelt. Das zweite Feld (Länge) beinhaltet die Anzahl der belegten Steuerdatenpakete KD innerhalb des Nutzdatenpakete-Containers LD. Der Container wird daraufhin mit den benötigten Steuerdatenpaketen KD gefüllt. Der verbleibende Rest bleibt entweder frei oder wird mit anderen Steuerungsinformationen gefüllt.

Die zweite Variante - Ankündigung des Modus im Kopffeld KF eines Nutzdatenpaketes - , die unter den beschriebenen Vorgaben nutzbar ist, sollte vorzugsweise verwendet werden, wenn die Bedingung, daß jedem Container für Nutzdatenpakete LD ein zugeordnetes Steuerdatenpaket KD zur Verfügung steht, nicht gilt. Dann werden maximal 8 Steuerdatenpakete KD in einen Container für Nutzdaten LD verpackt. Die verbleibenden 6 Byte werden verwendet, um die notwendige Ankündigung vorzunehmen. Zusätzlich ist ein Unterscheidungsmerkmal zwischen einem Container, in dem Nutzdatenpakete LD untergebracht sind, gegenüber einem Container, in dem ein Block von Steuerdatenpaketen KD untergebracht ist, notwendig. Dazu dient ein Feld im Kopffeld aller Container der Länge 64 Byte, das zwischen Nutzdaten, z.B. Flag = 0 und Steuerungsdaten, z.B. Flag = 1 unterscheidet (vgl. Figur 5).

Figur 7 zeigt schematisch den Aufbau einer Zentrale ZE für ein Kommunikationssystem nach der Erfindung, das heißt mit einer rahmenorientierten Übertragung von Datenpaketen unterschiedlicher Kapazität zwischen der Zentrale ZE und einer Vielzahl von Teilnehmern T, wobei die Zentrale ZE Kommunikationsressourcen in Form von Datenpaketen für die Teilnehmer T zuteilt und die Teilnehmer T Kommunikatonsressourcen von der Zentrale ZE anfordern. Ein Rahmengenerator RZG dient zur Generierung eines für die Übertragung vorgegebenen Übertragungsrahmens. Über einen Multiplexer MZX werden Steuerdatenpakete KD sowie Nutzdatenpakete LD in den vom Rahmengenerator RZG erzeugten Übertragungsrahmen eingefügt und an eine Übermittlungseinrichtung, im Falle eines Funknetzes an einen Sender TZX, weitergeleitet. Über die Auswahleinheit AZS wird aufgrund der Vereinbarung zwischen Zentrale ZE und Teilnehmer T festgelegt, ob innerhalb des Übertragungsrahmens Container für Nutzdatenpakete LD mit einer Mehrzahl von Steuerdatenpaketen KD gefüllt werden, oder ob normale Nutzdatenpakete LD übertragen werden. Die von den Teilnehmern T übermittelten Datenpakete werden mit einer Empfangseinrichtung RZX empfangen und mit dem Demultiplexer DZX in Steuerdatenpakete KD und Nutzdatenpakete LD zerlegt. Über die Auswerteeinrichtung AZE erfolgt eine Neuzusammenstellung von Steuerdatenpaketen KD und Nutzdatenpaketen LD für einen nachfolgenden Übertragungsrahmen oder eine Weitergabe an das Netz (Ausgang AZU). Die Auswerteeinrichtung AZE steuert auch die Auswahleinheit AZS, je nachdem, ob ein Teilnehmer T einen erhöhten Bedarf an Steuerdatenpaketen hat (bei Handover) und Container für Nutzdatenpakete LD durch Steuerdatenpakete KD ersetzt werden müssen.

Figur 8 zeigt den Aufbau einer Teilnehmereinrichtung eines Teilnehmers T mit den der Zentrale ZE entsprechenden Baugruppen:
Multiplexer MTX, Demultiplexer DTX, Auswerteeinrichtung ATE, Auswahleinheit ATS, Sende-bzw. Empfangseirichtung RTX, TTX und Rahmengenerator RTG, der hier allerdings über den von der Zentrale ZE vorgegebenen Rahmentakt gesteuert wird (Verbindung Auswerteeinheit ATE zum Rahmengenerator RTG). Im Unterschied zur Zentrale ZE besitzt die Teilnehmereinrichtung gemäß Figur 8 auch keinen direkten Netzzugang.

### Literatur:

1. D. Petras, "Entwicklung und Leistungsbewertung einer ATM-Funkschnittstelle", Dissertation an der RWTH Aachen, Aachen 1998
2. D. Petras, U. Vornefeld, "Joint Performance of DSA++MAC Protocol for wireless ATM under realistic traffic and channel models" wmATM'98, Hangzhou, China 1998

## Patentansprüche

1. Verfahren zur Ausnutzung von Datenpaketen unterschiedlicher Kapazität, die in einem Kommunikationssystem mit rahmenorientierter Übertragung zwischen einer Zentrale (ZE) und einer Vielzahl von Teilnehmern (T) übermittelt werden, wobei zwischen der Zentrale (ZE) und den Teilnehmern (T) Nutzdatenpakete (LD) und Steuerdatenpakete (KD) ausgetauscht werden und die Nutzdatenpakete (LD) ein Vielfaches der Datenkapazität der Steuerdatenpakete (KD) aufweisen, mit folgenden Schritten:
- durch eine Vereinbarung zwischen Zentrale (ZE) und Teilnehmern (T) werden im Übertragungsrahmen Container für Nutzdatenpakete (LD) jeweils mit einer Mehrzahl von Steuerdatenpaketen (KD) gefüllt,
- durch die Vereinbarung wird festgelegt, welche Container für Nutzdatenpakte (LD) jeweils mit Steuerdatenpaketen (KD) gefüllt werden,
- jene Steuerdatenpakete (KD), die in Containern für Nutzdatenpakete (LD) untergebracht werden, werden in einem Unterrahmen zusammengefaßt, der in seinem äußeren Format an das Format eines Nutzdatenpakets (LD) angepaßt ist.

2. Verfahren nach Anspruch 1, **dadurch gekennzeichnet, daß** die Vereinbarung zum Füllen der Container für Nutzdatenpakete (LD) mit Steuerdatenpaketen (KD) durch eine Ankündigung in einem zuvor übermittelten Steuerdatenpaket (KD) getroffen wird.

3. Verfahren nach Anspruch 1, **dadurch gekennzeichnet, daß** die Vereinbarung zum Füllen der Container für Nutzdatenpakete (LD) mit Steuerdatenpaketen (KD) durch eine Ankündigung in einem Kopffeld (KF) eines aktuellen zusammenhängend übermittelten Blockes von Steuerdatenpaketen (KD) getroffen wird.

4. Verfahren nach Anspruch 1, **dadurch gekennzeichnet, daß** die Vereinbarung zum Füllen der Container für Nutzdatenpakete (LD) mit Steuerdatenpaketen (KD) durch Übermittlung eines Anforderungssignals von einem Teilnehmer (T) zur Zentrale (ZE) getroffen wird.

5. Verfahren nach Anspruch 1, **dadurch gekennzeichnet, daß** die Vereinbarung zum Füllen der Container für Nutzdatenpakete (LD) mit Steuerdatenpaketen (KD) dadurch getroffen wird, daß ab einer bestimmten Anzahl von Anforderungen für Steuerdatenpakete (KD) durch einen Teilnehmer (T) statt dessen ein Container für Nutzdatenpakete (LD) für die Übermittlung von Steuerdatenpaketen (KD) von der Zentrale (ZE) zugewiesen wird.

6. Verfahren nach einem der Ansprüche 1 bis 5, **dadurch gekennzeichnet, daß** ein Steuerdatenpaket (KD) oder ein Teil hiervon benutzt wird Informationen über Art und/oder Inhalt nachfolgender Container für Nutzdatenpakete (LD), die mit Steuerdatenpaketen (KD) gefüllt werden, zu übermitteln.

7. Verfahren nach Anspruch 6, **dadurch gekennzeichnet, daß** ein Informationselement (IE) in einem Steuerdatenpaket (KD) untergebracht wird, welches Informationen über die Anzahl der für die Steuerdatenpakete (KD) belegten Felder innerhalb eines bestimmten nachfolgenden Containers für Nutzdatenpakete (LD) enthält.

8. Verfahren nach einem der Ansprüche 1 bis 7, **dadurch gekennzeichnet, daß** ein Steuerdatenpaket (KD) oder ein Teil davon benutzt wird, Informationen über die Lage des Containers für Nutzdatenpakete (LD), welcher mit Steuerdatenpaketen (KD) gefüllt wird, innerhalb eines Blockes von Nutzdatenpaketen (LD) anzuzeigen.

9. Verfahren nach einem der Ansprüche 1 bis 7, **dadurch gekennzeichnet, daß** alle Container für Nutzdatenpakete (LD), die mit Steuerdatenpaketen (KD) gefüllt werden, an einer vorgegeben Position innerhalb eines Blockes von Nutzdatenpaketen (LD) angeordnet werden, bspw. zu Beginn eines zusammenhängenden Blockes von Nutzdatenpaketen (LD).

10. Verfahren nach einem der Ansprüche 1 bis 8, **dadurch gekennzeichnet, daß** zu jedem Container für Nutzdatenpakete (LD), der mit Steuerdatenpaketen (KD) gefüllt wird, ein Informationselement (ID) in einem vorhergehenden Steuerdatenpaket (KD) untergebracht wird.

11. Zentrale (ZE) für ein Kommunikationssystem mit rahmenorientierter Übertragung von Datenpaketen unterschiedlicher Kapazität zwischen der Zentrale (ZE) und einer Vielzahl von Teilnehmern (T), wobei die Zentrale (ZE) Kommunikationsressourcen in Form der Datenpakete für die Teilnehmer (T) zuteilt und die Teilnehmer (T) Kommunikationsressourcen von der Zentrale (ZE) anfordern, wobei die Zentrale (ZE) folgende Baugruppen umfaßt:
- einen Rahmengenerator (RZG) zur Vorgabe eines Übertragungsrahmens,
- einen Multiplexer (MZX), der geeignet ist Steuerdatenpakete (KD) sowie Nutzdatenpakete (LD), deren Datenkapazität ein Vielfaches der Datenkapazität der Steuerdatenpakete (KD) beträgt, in den vorgegeben Übertragungsrahmen einzufügen, wobei jene Steuerdatenpakete (KD), die in Containern für Nutzdatenpakete (LD) untergebracht werden, in einem Unterrahmen zusammengefaßt sind, der in seinem äußeren Format an das Format eines Nutzdatenpaketes (LD) angepaßt ist.
- eine Auswahleinheit (AZS), die aufgrund einer Vereinbarung zwischen Zentrale (ZE) und Teilnehmer (T) festlegt, ob innerhalb des Übertragungsrahmens Container für Nutzdatenpakete (LD) mit einer Mehrzahl von Steuerdatenpaketen (KD) gefüllt werden,
- einen Demultiplexer (DZX), der geeignet ist, von Teilnehmern (T) in einem Übertragungsrahmen übermittelte Steuerdatenpakete (KD) und Nutzdatenpakete (LD) zu separieren und der Auswahleinheit (AZS) zuzuführen.

12. Teilnehmereinrichtung für ein Kommunikationssystem mit rahmenorientierter Übertragung von Datenpaketen unterschiedlicher Kapazität zwischen einer Zentrale (ZE) und einer Vielzahl von Teilnehmern (T), wobei die Zentrale (ZE) Kommunikationsressourcen in Form der Datenpakete für die Teilnehmer (T) zuteilt und die Teilnehmer (T) Kommunikationsressourcen (ZE) anfordern, wobei die Teilnehmereinrichtung folgende Baugruppen umfaßt:
- einen Demultiplexer (DTX), der geeignet ist, aus einem von der Zentrale (ZE) übermittelten Übertragungsrahmen Steuerdatenpakete (KD) und Nutzdatenpakete (LD) zu separieren und einer Auswerteeinrichtung (ATE) zuzuführen,
- einen Multiplexer (MTX), der geeignet ist, teilnehmerseitige Steuerdatenpakete (KD) sowie Nutzdatenpakete (LD), deren Datenkapazität ein Vielfaches der Datenkapazität der Steuerdatenpakete (KD) beträgt, in einen von der Zentrale (ZE) vorgegebenen Übertragungsrahmen einzufügen, wobei jene Steuerdatenpakete (KD), die in Containern für Nutzdatenpakete (LD) untergebracht werden, in einem Unterrahmen zusammengefaßt sind, der in seinem äußeren Format an das Format eines Nutzdatenpaketes (LD) angepaßt ist,
- eine Auswahleinheit (ATS), die aufgrund einer Vereinbarung zwischen Zentrale (ZE) und Teilnehmer (T) festlegt, ob innerhalb des Übertragungsrahmens Container für Nutzdatenpakete (LD) mit einer Mehrzahl von Steuerdatenpaketen (KD) gefüllt werden.

## Claims

1. Method for utilizing data packets of different capacity which are transmitted in a communication system with frame-oriented transfer between a control centre (ZE) and a multiplicity of subscribers (T), where user data packets (LD) and control data packets (KD) are interchanged between the control centre (ZE) and the subscribers (T), and the user data packets (LD) have a multiple of the data capacity of the control data packets (KD), having the following steps:
- an agreement between the control centre (ZE) and the subscribers (T) fills containers for user data packets (LD) with a respective plurality of control data packets (KD) in the transfer frame,
- the agreement stipulates which containers for user data packets (LD) are respectively filled with control data packets (KD),
- those control data packets (KD) which are accommodated in containers for user data packets (LD) are combined in a subframe whose external format matches the format of a user data packet (LD).

2. Method according to Claim 1, **characterized in that** the agreement for filling the containers for user data packets (LD) with control data packets (KD) is made by an announcement in a control data packet (KD) transmitted previously.

3. Method according to Claim 1, **characterized in that** the agreement for filling the containers for user data packets (LD) with control data packets (KD) is made by an announcement in a header field (KF) in a current cohesively transmitted block of control data packets (KD).

4. Method according to Claim 1, **characterized in that** the agreement for filling the containers for user data packets (LD) with control data packets (KD) is made by transmitting a request signal from a subscriber (T) to the control centre (ZE).

5. Method according to Claim 1, **characterized in that** the agreement for filling the containers for user data packets (LD) with control data packets (KD) is made by virtue of the fact that after a particular number of requests for control data packets (KD) by a subscriber (T) a container for user data packets (LD) is assigned by the control centre (ZE) instead for the purpose of transmitting control data packets (KD).

6. Method according to one of Claims 1 to 5, **characterized in that** a control data packet (KD) or a portion thereof is used to transmit information about the nature and/or content of subsequent containers for user data packets (LD) which are being filled with control data packets (KD).

7. Method according to Claim 6, **characterized in that** an information element (IE) is accommodated in a control data packet (KD) which contains information about the number of fields used for the control data packets (KD) within a particular subsequent container for user data packets (LD).

8. Method according to one of Claims 1 to 7, **characterized in that** a control data packet (KD) or a portion thereof is used to indicate information about the location of the container for user data packets (LD) which is being filled with control data packets (KD) within a block of user data packets (LD).

9. Method according to one of Claims 1 to 7, **characterized in that** all containers for user data packets (LD) which are being filled with control data packets (KD) are arranged at a prescribed position within a block of user data packets (LD), for example at the start of a cohesive block of user data packets (LD).

10. Method according to one of Claims 1 to 8, **characterized in that** for each container for user data packets (LD) which is being filled with control data packets (KD) an information element (ID) is accommodated in a preceding control data packet (KD).

11. Control centre (ZE) for a communication system with frame-oriented transfer of data packets of different capacity between the control centre (ZE) and a multiplicity of subscribers (T), where the control centre (ZE) allocates communication resources in the form of the data packets for the subscribers (T), and the subscribers (T) request communication resources from the control centre (ZE), the control centre (ZE) comprising the following assemblies:
- a frame generator (RZG) for prescribing a transfer frame,
- a multiplexer (MZX) which is suitable for inserting control data packets (KD) and also user data packets (LD), whose data capacity is a multiple of the data capacity of the control data packets (KD), into the prescribed transfer frame, those control data packets (KD) which are accommodated in containers for user data packets (LD) being combined in a subframe whose external format matches the format of a user data packet (LD),
- a selection unit (AZS) which takes an agreement between the control centre (ZE) and the subscriber (T) as a basis for stipulating whether containers for user data packets (LD) are filled with a plurality of control data packets (KD) within the transfer frame,
- a demultiplexer (DZX) which is suitable for separating control data packets (KD) and user data packets (LD) transmitted by subscribers (T) in a transfer frame and supplying them to the selection unit (AZS) .

12. Subscriber device for a communication system with frame-oriented transfer of data packets of different capacity between a control centre (ZE) and a multiplicity of subscribers (T), where the control centre (ZE) allocates communication resources in the form of the data packets for the subscribers (T), and the subscribers (T) request communication resources (ZE), the subscriber device comprising the following assemblies:
- a demultiplexer (DTX) which is suitable for separating control data packets (KD) and user data packets (LD) from a transfer frame transmitted by the control centre (ZE) and supplying them to an evaluation device (ATE),
- a multiplexer (MTX) which is suitable for inserting subscribers, control data packets (KD) and user data packets (LD), whose data capacity is a multiple of the data capacity of the control data packets (KD), into a transfer frame prescribed by the control centre (ZE), those control data packets (KD) which are accommodated in containers for user data packets (LD) being combined in a subframe whose external format matches the format of a user data packet (LD),
- a selection unit (ATS) which takes an agreement between the control centre (ZE) and the subscriber (T) as a basis for stipulating whether containers for user data packets (LD) are filled with a plurality of control data packets (KD) within the transfer frame.

## Revendications

1. Procédé d'exploitation de paquets de données de capacités différentes qui sont transmis au sein d'un système de communication dont la transmission est orientée « trames », entre un central (ZE) et plusieurs abonnés (T), des paquets de données utiles (LD) et des paquets de données de contrôle (KD) étant échangés entre le central (ZE) et les abonnés (T), et les paquets de données utiles (LD) ayant une capacité de données qui est un multiple de celle des paquets de données de contrôle (KD), comportant les étapes suivantes :
- des conteneurs pour des paquets de données utiles (LD) sont chaque fois remplis de plusieurs paquets de données de contrôle (KD) dans la trame de transmission par un accord entre le central (ZE) et les abonnés (T),
- les conteneurs de paquets de données utiles (LD) chaque fois remplis de paquets de données de contrôle (KD) sont définis par l'accord,
- ceux des paquets de données de contrôle (KD) qui sont déposés dans des conteneurs pour des paquets de données utiles (LD) sont regroupés dans une sous-trame de format extérieur adapté au format d'un paquet de données utiles (LD).

2. Procédé selon la revendication 1,
**caractérisé en ce que**
l'accord sur le remplissage des conteneurs de paquets de données utiles (LD) avec des paquets de données de contrôle (KD) s'effectue par une notification dans un paquet de données de contrôle (KD) transmis auparavant.

3. Procédé selon la revendication 1,
**caractérisé en ce que**
l'accord sur le remplissage des conteneurs de paquets de données utiles (LD) avec des paquets de données de contrôle (KD) s'effectue par une notification dans un champ d'en-téte (KF) d'un bloc jointif actuellement transmis de paquets de données de contrôle (KD).

4. Procédé selon la revendication 1,
**caractérisé en ce que**
l'accord sur le remplissage des conteneurs de paquets de données utiles (LD) avec des paquets de données de contrôle (KD) s'effectue par transmission d'un signal de demande d'un abonné (T) au central (ZE).

5. Procédé selon la revendication 1,
**caractérisé en ce que**
l'accord sur le remplissage des conteneurs de paquets de données utiles (LD) avec des paquets de données de contrôle (KD) s'effectue du fait qu'à partir d'un certain nombre de demandes de paquets de données de contrôle (KD) d'un abonné (T), un conteneur de paquets de données utiles (LD) est affecté en lieu et place pour la transmission de paquets de données de contrôle (KD) par le central (ZE).

6. Procédé selon l'une quelconque des revendications 1 à 5,
**caractérisé en ce qu'**
un paquet de données de contrôle (KD) ou une partie de celui-ci est utilisé pour transmettre des informations sur le type et/ou le contenu de conteneurs suivants de paquets de données utiles (LD) qui sont remplis de paquets de données de contrôle (KD).

7. Procédé selon la revendication 6,
**caractérisé en ce qu'**
un élément d'information (IE) est déposé dans un paquet de données de contrôle (KD), qui contient des informations sur le nombre de champs occupés par les paquets de données de contrôle (KD) à l'intérieur d'un certain conteneur suivant pour paquets de données utiles (LD).

8. Procédé selon l'une quelconque des revendications 1 à 7,
**caractérisé en ce qu'**
un paquet de données de contrôle (KD) ou une partie de celui-ci est utilisé pour indiquer la position à l'intérieur d'un bloc de paquets de données utiles (LD) du conteneur de paquets de données utiles (LD) qui est rempli de paquets de données de contrôle (KD).

9. Procédé selon l'une quelconque des revendications 1 à 7,
**caractérisé en ce que**
tous les conteneurs de paquets de données utiles (LD) qui sont remplis de paquets de données de contrôle (KD) sont disposés à une position prédéfinie à l'intérieur d'un bloc de paquets de données utiles (LD), par exemple au début d'un bloc jointif de paquets de données utiles (LD).

10. Procédé selon l'une quelconque des revendications 1 à 8,
**caractérisé en ce qu'**
un élément d'information (ID) est déposé dans un paquet de données de contrôle (KD) précédent pour chaque conteneur de paquets de données utiles (LD) qui est rempli de paquets de données de contrôle (KD).

11. Central (ZE) pour un système de communication avec transmission orientée « trames » de paquets de données de capacités différentes entre un central (ZE) et plusieurs abonnés (T), le central (ZE) affectant des ressources de communication sous la forme des paquets de données aux abonnés (T) et les abonnés (T) demandant des ressources de communication au central (ZE), le central (ZE) englobant les modules suivants :
- un générateur de trame (RZG) pour l'allocation d'une trame de transmission,
- un multiplexeur (MZX) pouvant insérer des paquets de données de contrôle (KD) dans la trame de transmission allouée ainsi que des paquets de données utiles (LD) dont la capacité de données est un multiple de la capacité de données des paquets de données de contrôle (KD), ceux des paquets de données de contrôle (KD) qui sont déposés dans des conteneurs pour paquets de données utiles (LD) étant regroupés dans une sous-trame dont le format extérieur est adapté au format d'un paquet de données utiles (LD),
- une unité de sélection (AZS) qui, sur la base d'un accord entre le central (ZE) et les abonnés (T), définit si au sein de la trame de transmission, des conteneurs de paquets de données utiles (LD) seront remplis de plusieurs paquets de données de contrôle (KD),
- un démultiplexeur (DZX) pouvant séparer des paquets de données de contrôle (KD) de paquets de données utiles (LD) transmis par des abonnés (T) dans une trame de transmission et les transmettre à l'unité de sélection (AZS).

12. Dispositif d'abonnés d'un système de communication de transmission orientée « trames » de paquets de données de capacités différentes entre un central (ZE) et plusieurs abonnés (T), le central (ZE) affectant aux abonnés (T) des ressources de communication sous la forme des paquets de données et les abonnés (T) demandant des ressources de communication (ZE), le dispositif d'abonnés englobant les modules suivants :
- un démultiplexeur (DTX) pouvant séparer des paquets de données de contrôle (KD) et les paquets de données utiles (LD) de trames de transmission transmises par le central (ZE) et les transmettre à un dispositif d'exploitation (ATE),
- un multiplexeur (MTX) pouvant insérer dans une trame de transmission allouée par le central (ZE) des paquets de données de contrôle (KD) côté abonnés ainsi que des paquets de données utiles (LD) dont la capacité de données est un multiple de la capacité de données des paquets de données de contrôle (KD), ceux des paquets de données de contrôle (KD) qui sont déposés dans des conteneurs pour paquets de données utiles (LD) étant regroupés dans une sous-trame dont le format extérieur est adapté au format d'un paquet de données utiles (LD),
- une unité de sélection (ATS) qui, sur la base d'un accord entre le central (ZE) et les abonnés (T), définit si au sein de la trame de transmission, des conteneurs de paquets de données utiles (LD) seront remplis de plusieurs paquets de données de contrôle (KD).
